# EUROPEAN PATENT APPLICATION

(11) **EP 4 421 346 A1**
(43) Date of publication of application: **28.08.2024**
(21) Application number: 24158648.6
(22) Date of filing: 20.02.2024
(51) Int. Cl.: F16F 9/16, F16F 9/48

(54) **SEQUENTIAL TELESCOPIC PASSIVE DAMPER**

(30) Priority: 23.02.2023 CN 202310193096; 17.10.2023 US 202318380654
(71) Applicant: BeijingWest Industries Co. Ltd., 102400 Beijing (CN)
(72) Inventor: WRZESINSKI, Jakub, Kraków (PL); JARZABEK, Piotr Krzysztof, Wieliczka (PL); GASIOR, Grzegorz, Ciezkowice (PL)
(74) Representative: Lukaszyk, Szymon

(57) **Abstract**

A damper assembly (20) comprises a inner damper (22) and an outer damper (24) in a telescopic configuration. The inner damper includes a first tube (40), a rod (30) disposed at least partially within the first tube and coaxially therewith, and a main piston (50) connected to the rod and slidably disposed within the first tube. The main piston divides an interior of the first tube into a first chamber (52) and a second chamber (54). The outer damper includes a second tube (80) disposed coaxially around the inner damper and a second piston (84) connected to an axial end of the first tube and dividing an interior of the second tube into an upper oil chamber (86) and a lower oil chamber (88), the second piston defining a second passage providing fluid communication between the upper oil chamber and the lower oil chamber. A displacement fluid passage (110) provides fluid communication between the first chamber and the upper oil chamber.

## Description

### Field of the Invention

The present invention relates generally to a damper assembly for a vehicle and, in particular to a telescopic damper assembly.

### Description of the Prior Art

Suspension systems are provided to filter or isolate the vehicle's body (sprung portion) from the vehicle's wheels and axles (unsprung portion) when the vehicle travels over vertical road surface irregularities as well as to control body and wheel motion. In addition, suspension systems are also used to maintain an average vehicle attitude to promote improved stability of the vehicle during maneuvering. The typical passive suspension system includes a spring and a damping device in parallel with the spring which are located between the sprung portion and the unsprung portion of the vehicle.

Due to an increase in the complexity of vehicle body and suspension, the length of a shock absorber or damper assembly becomes more and more critical because it has a direct impact in the installation, placement (space) and the cost of the vehicle body. This is especially true for electric cars, which have unique packaging challenges for suspension components.

One such a damper assembly is disclosed in U.S. Patent 6,619,445. The damper assembly comprises a main tube extending along a center axis between a first end and a second end. The main tube defines a fluid chamber extending therebetween for containing a working fluid. A main piston is slidably disposed in the fluid chamber dividing the fluid chamber in to a compression chamber and a rebound chamber. A piston rod extends along the center axis and coupled to the main piston for moving the main piston between a compression stroke and a rebound stroke. An external tube, radially spaced apart from the main tube, extends about the main tube between a closed end and an opened end. The closed end is adjacent the first end. The opened end is adjacent to the second end. The external tube and the main tube define a compensation chamber extending therebetween.

### Summary of the Invention

The present invention provides a damper assembly. The damper assembly comprises inner damper and an outer damper in a telescopic configuration. The inner damper includes a first tube, a rod disposed at least partially within the first tube and coaxially therewith, and a main piston connected to the rod and slidably disposed within the first tube. The main piston divides an interior of the first tube into a first chamber and a second chamber. The outer damper includes a second tube disposed coaxially around the inner damper and a second piston connected to an axial end of the first tube and dividing an interior of the second tube into an upper oil chamber and a lower oil chamber, the second piston defining a second passage providing fluid communication between the upper oil chamber and the lower oil chamber. The damper assembly also includes a displacement fluid passage providing fluid communication between the first chamber and the upper oil chamber.

The present invention also provides a damper assembly. The damper assembly comprises inner damper and an outer damper in a telescopic configuration. The inner damper includes a first tube, a rod disposed at least partially within the first tube and coaxially therewith, and a main piston connected to the rod and slidably disposed within the first tube. The main piston divides an interior of the first tube into a first chamber and a second chamber. The outer damper includes a second tube disposed coaxially around the inner damper and a second piston connected to an axial end of the first tube and dividing an interior of the second tube into an upper oil chamber and a lower oil chamber. The second piston defining a second passage providing fluid communication between the upper oil chamber and the lower oil chamber. The outer damper is configured to move, during a compression stroke, from a full-extended position toward a compressed position after the main piston of the inner damper has moved substantially completely toward the second piston. The main piston of the inner damper is configured to move, during a rebound stroke, away from the second piston and toward an extended position after the outer damper has moved substantially completely to a full-extended position.

### Brief Description of the Drawings

Other advantages of the present invention will be readily appreciated, as the same becomes better understood by reference to the following detailed description when considered in connection with the accompanying drawings wherein:
FIG. 1 is a cutaway view of a damper assembly in accordance with an embodiment of the present invention;
FIGS. 2A-2C show cutaway views of the damper assembly of FIG. 1, in a nominal position, a full-compressed position, and a full-extended position, respectively;
FIG. 3 shows a cutaway view of the damper assembly of FIG. 1 during a compression stroke and moving from a full-extended position;
FIGS. 4A-4E show cutaway views of the damper assembly of FIG. 1 at various positions in a compression stroke;
FIG. 5 shows a cutaway view of the damper assembly of FIG. 1 during a rebound stroke and moving from the nominal position;
FIGS. 6A-6E show cutaway views of the damper assembly of FIG. 1 at various positions in a rebound stroke; and
FIG. 7 shows a graph illustrating force in kilonewtons (kN) as a function of stroke in meters (m) for each of a standard damper and the sequential telescopic damper of the present disclosure.

### Description of the Enabling Embodiment

Referring to the Figures, wherein like numerals indicate corresponding parts throughout the several views, a damper assembly 20 is provided. The damper assembly 20 may also be called a shock absorber, and may be used as part of a suspension system in a motor vehicle, such as a car or truck. Compared to conventional damper designs, the damper assembly 20 of the present disclosure may provide similar stroke and damping, but with a shorter body length. The damper assembly 20 may be called a Sequential Telescopic Passive Damper.

The damper assembly 20 is designed to have a relatively small body with a maximized stroke. When compared with conventional dampers, the damper assembly 20 may have considerably shorter compressed length while keeping a similar or equal stroke. The damper assembly 20 of the present disclosure may provide many benefits at the vehicle level. It may provide for a more compact rear suspension, allowing passenger and light commercial vehicles to have additional space for a trunk and/or for batteries (e.g. in electrified vehicles).

The damper assembly 20 of the present disclosure utilizes a two-piece (telescopic) rod including a damper rod and a second rod in the form of a moving monotube. The damper assembly 20 of the present disclosure may incorporate existing parts and existing assembly designs, with some additional components and design aspects. The damper assembly 20 of the present disclosure may incorporate a concept of a damper with a divided scope of work. The damper rod and the second rod may not move simultaneously, but in sequence. The inner damper may provide damping and simultaneously function as the second rod for the outer damper, which also provides a damping function.

Movement of the damper rod and the second rod (monotube) is realized sequentially by the appropriate selection of valve characteristics: monotube piston valve, twin-tube piston valve, and base valve - by properly tuning of the valves. There are two separated oil chambers - a mono-tube oil chamber and a twin-tube oil chamber.

The damper assembly 20 of the present disclosure may provide several advantages over conventional dampers. It may provide a compressed length that is approximately 20% shortened compared to conventional twin tube dampers having a similar extended length. The damper assembly 20 of the present disclosure includes design aspects and components based on proven solutions and technologies of monotube and twin tube dampers. The damper assembly 20 of the present disclosure provides for temperature compensation by incorporating two gas chambers connected by via one or more gas passages. The damper assembly 20 of the present disclosure may exhibit no cavitation phenomena on either side (caused by temperature influence oil volume), and no multiplication of force from gas. It does not exhibit any high-pressure build-up with rebound movement. The damper assembly 20 of the present disclosure provides is much simpler than other, competing designs, with less seals and guiding parts. The damper assembly 20 of the present disclosure may be easier to tune for particular applications when compared to alternative designs.

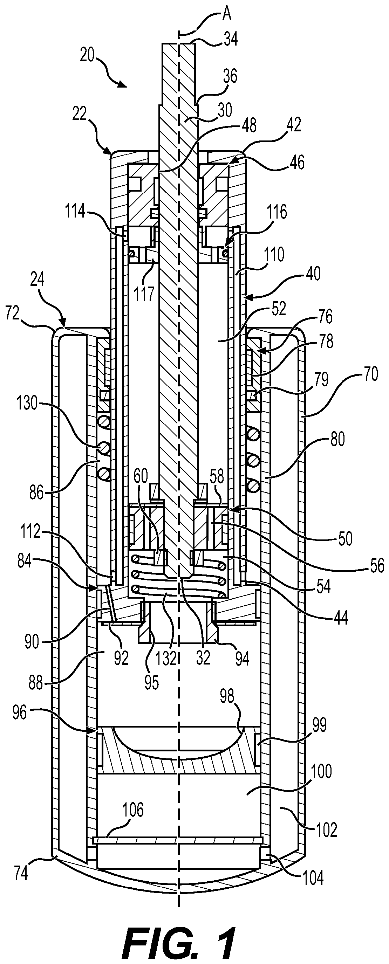

FIG. 1 is a cutaway view of a damper assembly 20 in accordance with an embodiment of the present invention. The damper assembly 20 includes an inner damper 22 and an outer damper 24 in a telescopic configuration.

The inner damper 22 includes a damper rod 30 extending along an axis A and translatable along the axis A. The damper rod 30 includes a proximal end 32 and a distal end 34 spaced apart from the proximal end 32 along the axis A. The damper rod 30 includes a shoulder 36 spaced apart from the distal end 34 and configured for attachment to an external structure, such as a suspension component or a chassis-mounted bracket on a vehicle. In some embodiments, the damper rod 30 may include an external threading (not shown) between the distal end 34 and the shoulder 36 for attachment to the external structure. The inner damper 22 also includes a first tube 40 having a tubular shape coaxial with the axis A and having a first end 42 and a second end 44 opposite from the first end 42. A middle seal assembly 46 is disposed within the first tube 40 adjacent the first end 42, providing a fluid-tight seal. The middle seal assembly 46 defines a rod bore 48, and the damper rod 30 passes through the rod bore 48 in a fluid-tight seal, and configured to allow the damper rod 30 to translate along the axis A relative to the first tube 40.

A main piston 50 is slidably disposed within the first tube 40 and connected to the damper rod 30 adjacent to the proximal end 32. The main piston 50 divides the interior of the first tube 40 into a first chamber 52 and a second chamber 54. The first chamber 52 extends between the middle seal assembly 46 and the main piston 50. The second chamber 54 is on an opposite side of the main piston 50 from the first chamber 52. A compression valve 56, 58 regulates fluid flow between the first chamber 52 and the second chamber 54 during a compression stroke. The compression valve 56, 58 includes one or more first piston passages 56 extending through the main piston 50 to provide fluid communication between the second chamber 54 and the first chamber. The compression valve 56, 58 also includes one or more compression valve members 58, such as deflective discs, selectively covering the first piston passages 56 for controlling fluid flow therethrough. Fluid may be channeled through the first piston passages 56 as the main piston 50 is moved through the first tube 40 to provide a damping function of the inner damper 22. A fastener 60, such as a retaining ring, holds the main piston 50 to the damper rod 30 adjacent to the proximal end 32 of the damper rod 30.

The outer damper 24 includes an outer tube 70 having a tubular shape coaxial with the axis A and having an upper end 72 and a lower end 74 opposite from the upper end 72. The outer tube 70 is closed at the lower end 74. The outer damper 24 also includes a second tube 80 having a tubular shape coaxial with the axis A and located inside of the outer tube 70. The second tube 80 has an outside diameter that is smaller than an inside diameter of the outer tube 70, providing an annular chamber 102 between the outer tube 70 and the second tube 80. The second tube 80 is closed at an end thereof adjacent to the lower end 74. A main rod guide 76 is disposed within the second tube 80 adjacent the upper end 72, providing a fluid-tight seal with the first tube 40. The main rod guide 76 includes one or more sealing rings 78, and the first tube 40 passes through the sealing rings 78 in a fluid-tight seal, to allow the first tube 40 to translate along the axis A relative to the second tube 80. The first tube 40 of the inner damper 22, therefore, functions as a second rod in the outer damper 24.

The outer damper 24 also includes a second piston 84 connected to the second end 44 of the first tube 40. The second piston 84 is disposed within the second tube 80 and in sealing engagement with an interior surface of the second tube 80. The second piston 84 divides the interior of the second tube 80 into an upper oil chamber 86 and a lower oil chamber 88. The upper oil chamber 86 extends between the main rod guide 76 and the second piston 84. A rebound valve 90, 92 regulates flow between the upper oil chamber 86 and the lower oil chamber 88 during a rebound stroke. The rebound valve 90, 92 includes one or more second piston passages 90 extending through the second piston 84 and providing fluid communication between the upper oil chamber 86 and the lower oil chamber 88. The rebound valve 90, 92 also includes one or more rebound valve members 92, such as deflective discs, selectively covering the second piston passages 90 for controlling fluid flow therethrough. Fluid may be channeled through the second piston passages 90 as the second piston 84 is moved through the second tube 80 to provide a damping function of the outer damper 24. The second piston 84 also includes a tubular portion 94 having a tubular shape coaxial with the axis A and defining an internal passage 95 providing fluid communication between the lower oil chamber 88 and the second chamber 54 of the first tube 40.

In operation, each of the first chamber 52 and the second chamber 54 of the first tube 40, as well as the upper oil chamber 86 and the lower oil chamber 88 may be filled with a non-compressible fluid, such as oil.

A gas cup 96 is disposed within the second tube 80 and defines a lower surface of the lower oil chamber 88. The gas cup 96 separates the lower oil chamber 88 from a gas compartment 100 that extends from a lower surface of the gas cup 96 to the closed end of the second tube 80 adjacent to the lower end 74 of the outer tube 70. The gas compartment 100 is in fluid communication with the annular chamber 102 via one or more gas passages 104 through the second tube 80 adjacent to the lower end 74 of the outer tube 70. The gas cup 96 moves axially within the second tube 80, and gas collected within the gas compartment 100 and the annular chamber 102 compensates for changes in the volume of the parts being inserted and withdrawn from the second tube 80 and the parts being inserted and withdrawn from the first tube 40 (i.e. due to the inner damper 22 moving in and out of the outer damper 24). The relatively large volume of gas in the gas compartment 100 and/or in the annular chamber 102 compensate for changes in oil volume due to changes in temperature.

The gas cup 96 includes a concave upper surface 98 that may receive the tubular portion 94 of the second piston 84 when the damper assembly 20 is in a compressed state. The concave upper surface 98 may also cause the gas cup 96 to deform axially outwardly and to increase sealing pressure against the interior wall of the second tube 80 in response to fluid pressure in the lower oil chamber 88. The gas cup 96 includes an annular seal 99 engaging the inside wall of the second tube 80 and providing a fluid-tight seal to prevent oil from escaping into the gas compartment 100. A stop ring 106 is disposed in an interior wall of the second tube 80 adjacent and just above to the one or more gas passages 104 to define an end-of-travel limit and to prevent the gas cup 96 from covering the one or more gas passages 104.

The first tube 40 defines a displacement fluid passage 110 extending annularly and axially along a length thereof between the second end 44 and the middle seal assembly 46 and providing fluid communication between the first chamber 52 and the upper oil chamber 86. A plurality of first radial passages 112 are located adjacent to the second piston 84 and connects the displacement fluid passage 110 to upper oil chamber 86 for providing fluid communication therebetween. A plurality of second radial passages 114 are located spaced apart from the second piston 84 and adjacent to the middle seal assembly 46 and connect the displacement fluid passage 110 to the first chamber 52 for providing fluid communication therebetween.

A check valve 116 includes a valve body 117 disposed in the first tube 40 adjacent to middle seal assembly 46. The check valve 116 is configured to allow fluid flow from the first chamber 52 and into the displacement fluid passage 110, while blocking fluid flow in an opposite direction.

A rebound coil spring 130 is disposed within the upper oil chamber 86 around the second tube 80 and adjacent to the main rod guide 76. The rebound coil spring 130 engages a top end of the second piston 84 when the outer damper 24 is at or near a full-extended position and during a rebound stroke. A compression coil spring 132 is disposed in the second chamber 54 and adjacent to the second piston 84. The compression coil spring 132 engages and biases the main piston 50 when the inner damper 22 is at or near a full-compressed position during a compression stroke.

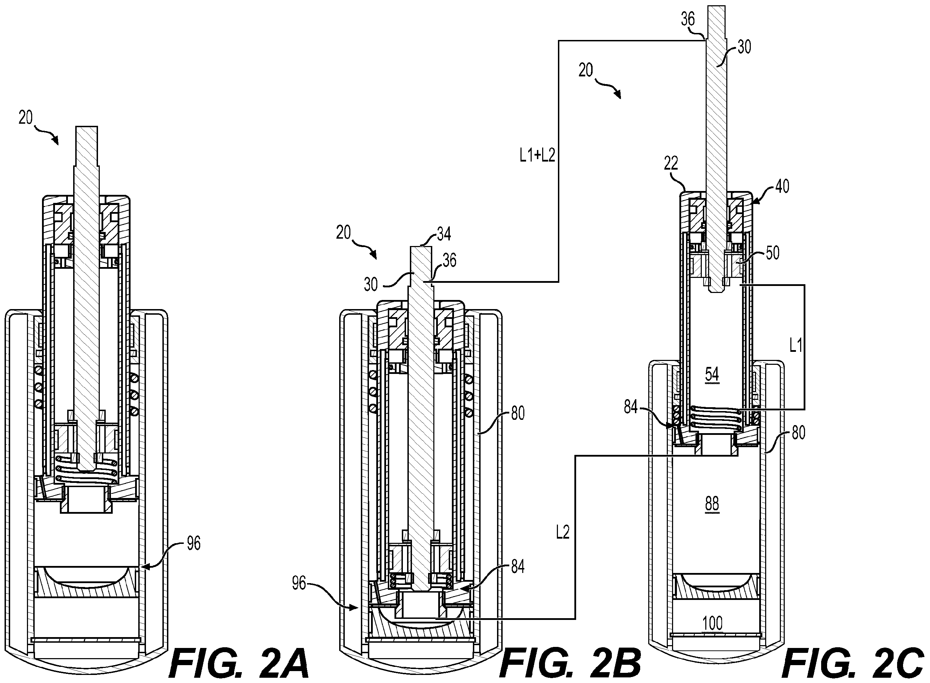

FIG. 2A shows the damper assembly 20 in a nominal, or design position, and FIGS. 2B and 2C show the damper assembly 20 in full-compressed and full-extended positions, respectively. It is significant that the full stroke L1 + L2 of the damper assembly 20 is provided by: a first stroke length L1 of the inner damper 22 resulting from the main piston 50 moving in an axial direction with the damper rod 30 through the first tube 40, and a second stroke length L2 resulting from the second piston 84 moving in an axial direction with the first tube 40 though the second tube 80.

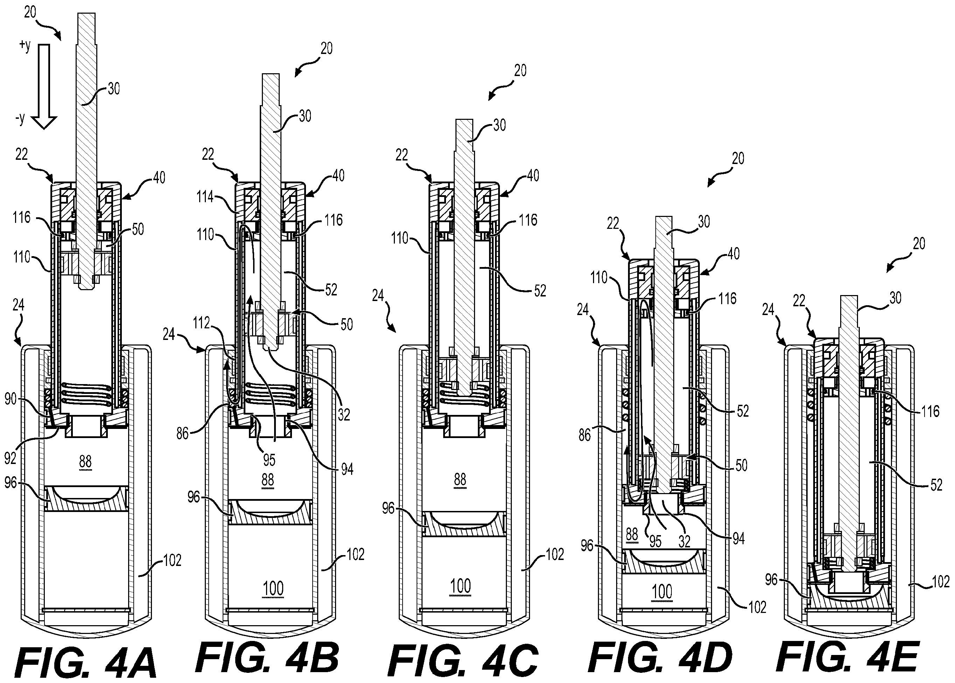

FIGS. 4A-4E show cutaway views of the damper assembly 20 at various positions in a compression stroke.

In the compression movement, the damper rod 30 with the main piston 50 and compression valve 56, 58 moves in the "-y" direction (i.e. in the compression direction). The check valve 116 prevents the flow of oil from the upper oil chamber 86 to the first chamber 52. Such a flow would result in the displacement of the first tube 40 in the "+ y" direction (i.e. in the rebound direction) and would inhibit generation of damping forces. The check valve 116 is configured to allow fluid flow from the first chamber 52 through the fluid passage 110, to oil chamber 86. In the initial phase of the compression movement, the damper rod 30 moves, then the compression valve 56, 58 is responsible for generating the appropriate damping forces. The first tube 40 does not move. When the inner damper 22 reaches its full-compressed position, the main piston 50 makes contact via compression coil spring 132 on the end of the first tube 40 and forces the first tube 40 to move in the direction of compression. The compression coil spring 132 may smoothly start the movement of the first tube 40.

In an initial phase in the compression stroke, only the main piston 50 moves in an axial direction with the damper rod 30 through the first tube 40. The main piston 50 moves in the inner damper 22. During this phase of the movement the first tube 40 does not move. When the inner damper 22 is in a full-compressed position, the main piston 50 contacts the compression coil spring 132 and forces the first tube 40 to move, ensuring that the stroke continues - until the damper assembly 20 reaches a full-compressed position. In an initial phase in the rebound stroke, both the damper rod 30 and first tube 40 move simultaneously. When the outer damper 24 reaches a full-extended position, with the second piston 84 contacting and compressing the rebound coil spring 130, the damper rod 30 with the main piston 50 continues its motion in the inner damper 22, until the damper assembly 20 reaches a full-extended position. In the nominal position, forces acting on the moving parts will push the first tube 40 upwards. The damper assembly 20 is, by design, asynchronous.

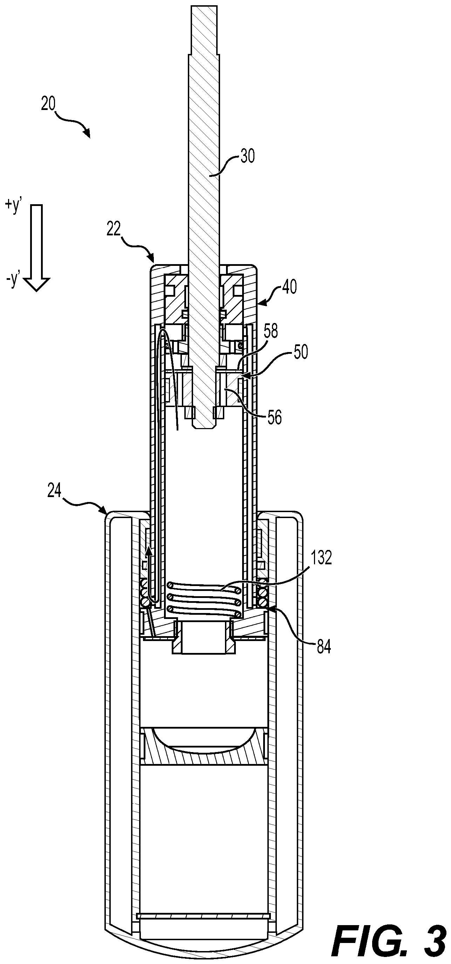

FIG. 3 shows a cutaway view of the damper assembly 20 during a compression stroke and moving from the full-extended position. Starting from a full-extended position, during a compression stroke - first motion level is realized by the inner damper 22 and moving of the damper rod 30. After the inner damper 22 reaches a full-compressed position, with the main piston 50 contacting the compression coil spring 132, second level of motion is engaged and then realized by first tube 40. Damping is provided by the compression valve 56, 58. In other words, the outer damper 24 is configured to move, during a compression stroke, from a full-extended position toward a compressed position after the main piston 50 of the inner damper 22 has moved substantially completely toward the second piston.

In accordance with an aspect of the present disclosure, the first chamber 52 and the upper oil chamber 86 may have equal cross-sectional areas. Thus, the amount of oil forced through the compression valve 56, 58 will remain constant through the stroke of the outer damper 24. Therefore, whether the damper rod 30 or the first tube 40 remains in motion, the flow through the compression valve 56, 58 will not change (at constant input speed). This means that the damping forces will not change as well. However, the force of the gas will increase with changing speed.

In the compression movement, oil from the lower oil chamber 88 flows through compression valve 56, 58 into the first chamber 52. Then, through the openings and channels of the first tube 40, it is forced into the upper oil chamber 86. The rebound valve 90, 92 remains closed. To avoid cavitation in the first chamber 52 and/or in the upper oil chamber 86, it may be necessary to ensure adequate gas pressure in the gas compartment 100. Gas pressure may be adjusted based on maximum assumed damping forces of the compression movement.

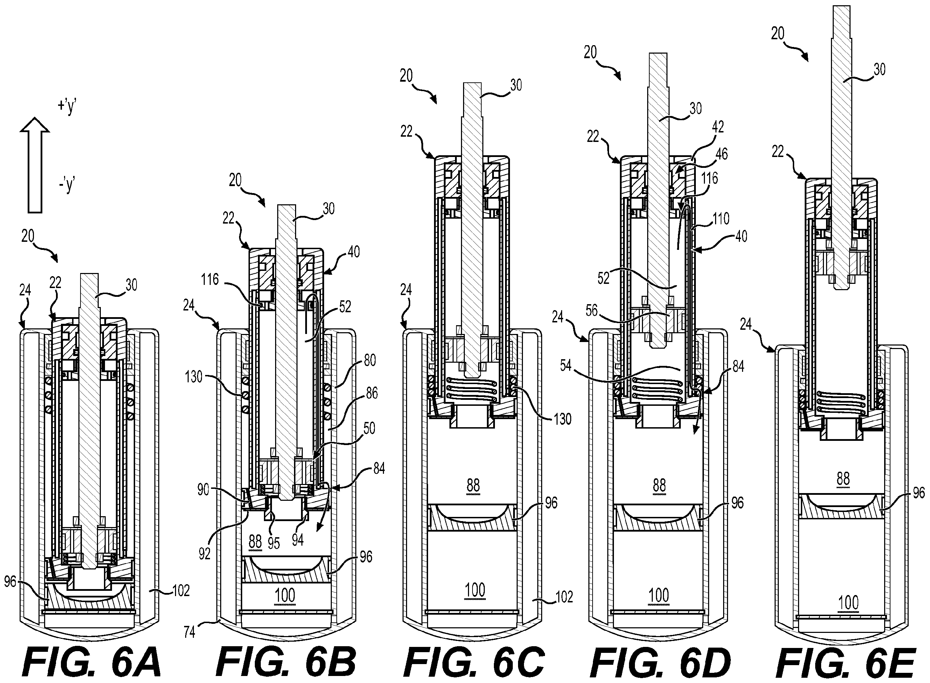

FIGS. 6A-6E show cutaway views of the damper assembly of FIG. 1 at various positions in a rebound stroke.

Damping in the rebound stroke is provided by the rebound valve 90, 92. During rebound movement, first tube 40 and the damper rod 30, with the main piston 50, moves in the "+ y" direction. The compression valve 56, 58 is closed and oil is forced from the first chamber 52 through the check valve 116 and then through the holes and channels in the first tube 40 and into the upper oil chamber 86. The oil then flows through the rebound valve 90, 92 into the lower oil chamber 88. The rebound coil spring 130 may function to provide a smooth end-stroke of the movement of the first tube 40 of the inner damper 22 during a rebound stroke.

As in the compression movement - the amount of oil forced through the rebound valve 90, 92 will not change, and thus the level of damping forces in the rebound movement will not depend on which of the elements: damper rod 30 or first tube 40 is in motion.

Similarly to the compression stroke, the gas force will change during the speed change in the rebound stroke.

The input speed may be a result of the speed of the first tube 40 and the speed of the damper rod 30 in relation to the first tube 40.

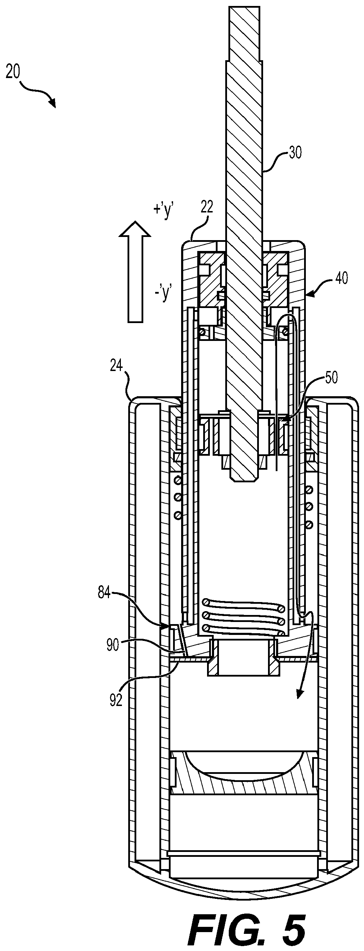

FIG. 5 shows a cutaway view of the damper assembly of FIG. 1 during a rebound stroke and moving from the nominal position. Starting from the full-compressed position, during rebound stroke - first motion level is realized by simultaneous motion of the first tube 40 and damper rod 30. After the first tube 40 reaches fully extended position, further damping is realized by motion of only damper rod 30 in the inner damper 22. In other words, the main piston 50 of the inner damper 22 is configured to move, during the rebound stroke, away from the second piston 84 and toward an extended position after the outer damper 24 has moved substantially completely to a full-extended position.

The compression valve 56, 58 and the rebound valve 90, 92 may each have typical construction, meaning that the respective orifice is responsible for force level generated in low range of velocities, and a respective disc stack, such as the valve members 58, 92 is responsible for force level generated in medium range of velocities. Forces generated in high range of velocities may be determined by holes in a respective one of the pistons 50, 84 (i.e. the first piston passages 56 and/or the second piston passages 90). The provided design may be used with one or more different types of valves.

During the full stroke of the damper assembly 20, gas force due to compression of gas in the gas compartment 100 and the annular chamber 102 changes as a function of linear stroke due to a change in the active surface. In the sequential movement of the damper assembly 20 in compression, the damper rod 30 moves first, so the gas force acts on a cross-section of the of the main piston 50. When the first tube 40 starts to move, the gas force increases as a cross-section of the second piston 84, which is larger than the cross-section of the main piston 50, becomes the active cross-section.

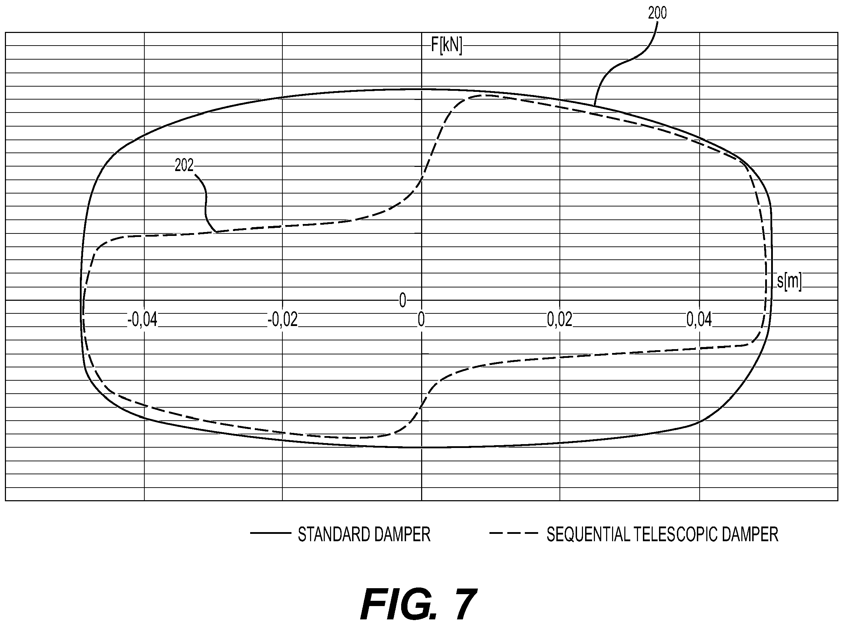

FIG. 7 shows a graph illustrating force in Kilonewtons (kN) as a function of stroke in meters (m). FIG. 7 includes a first plot 200 showing force vs stroke for a standard damper, and a second plot 202 showing force vs stroke for the sequential telescopic damper of the present disclosure, such as the damper assembly 20. The slope of the second plot 202 on the transitions is due substantially to effects of the rebound coil spring 130 and/or the compression coil spring 132, resulting from length and characteristics of the coil springs 130, 132. The difference between the levels of forces is due, substantially, to changes of the gas forces.

Obviously, many modifications and variations of the present invention are possible in light of the above teachings and may be practiced otherwise than as specifically described while within the scope of the appended claims. The use of the word "said" in the apparatus claims refers to an antecedent that is a positive recitation meant to be included in the coverage of the claims whereas the word "the" precedes a word not meant to be included in the coverage of the claims.

## Claims

1. A damper assembly (20) comprising:
an inner damper (22) and an outer damper (24) in a telescopic configuration;
the inner damper (22) including a first tube (40), a rod (30) disposed at least partially within the first tube (40) and coaxially therewith, and a main piston (50) connected to the rod (30) and slidably disposed within the first tube (40), the main piston (50) dividing an interior of the first tube (40) into a first chamber (52) and a second chamber (54);
the outer damper (24) including a second tube (80) disposed coaxially around the inner damper (22) and a second piston (84) connected to an axial end of the first tube (40) and dividing an interior of the second tube (80) into an upper oil chamber (86) and a lower oil chamber (88), the second piston (84) defining a second passage providing fluid communication between the upper oil chamber (86) and the lower oil chamber (88); and
a displacement fluid passage (110) providing fluid communication between the first chamber (52) and the upper oil chamber (86).

2. The damper assembly (20) of Claim 1, wherein the outer damper (24) is configured to move, during a compression stroke, from a full-extended position toward a compressed position after the main piston (50) of the inner damper (22) has moved substantially completely toward the second piston (84).

3. The damper assembly (20) of Claim 1, wherein the main piston (50) of the inner damper (22) is configured to move, during a rebound stroke, away from the second piston (84) and toward an extended position after the outer damper (24) has moved substantially completely to a full-extended position.

4. The damper assembly (20) of any one of Claims 1 to 3, wherein the outer damper (24) is configured as a twin-tube damper including an outer tube (70) disposed coaxially around the second tube (80) and defining an annular chamber (102) therebetween.

5. The damper assembly (20) of any one of Claims 1 to 4, further comprising a check valve (116) configured to allow fluid flow from the first chamber (52) and into the displacement fluid passage (110), while blocking fluid flow in an opposite direction.

6. The damper assembly (20) of Claim 1,
wherein the outer damper (24) is configured to move, during a compression stroke, from a full-extended position toward a compressed position after the main piston (50) of the inner damper (22) has moved substantially completely toward the second piston (84); and
wherein the main piston (50) of the inner damper (22) is configured to move, during a rebound stroke, away from the second piston (84) and toward an extended position after the outer damper (24) has moved substantially completely to a full-extended position.

7. The damper assembly (20) of Claim 6, wherein the outer damper (24) is configured as a twin-tube damper including an outer tube (70) disposed coaxially around the second tube (80) and defining an annular chamber (102) therebetween.

8. The damper assembly (20) of any one of Claims 1 to 4, 6 and 7, wherein the displacement fluid passage (110) extends through a wall of the first tube (40) in an axial direction and along a length thereof.

9. The damper assembly (20) of Claim 8, wherein the wall of the first tube (40) further defines a first radial passage (112) located adjacent to the second piston (84) and connecting the displacement fluid passage (110) to upper oil chamber (86) for providing fluid communication therebetween.

10. The damper assembly (20) of Claim 8 or 9, wherein the wall of the first tube (40) further defines a second radial passage (114) spaced apart from the second piston and connecting the displacement fluid passage (110) to the first chamber (52).

11. The damper assembly (20) of Claim 6 or 7, further comprising a check valve (116) configured to allow fluid flow from the first chamber (52) and into the upper oil chamber (86), while blocking fluid flow in an opposite direction.

12. The damper assembly (20) of any one of Claims 1 to 11, further comprising a gas cup (96) disposed in the second tube (80) and separating the lower oil chamber (88) from a gas compartment (100), with the gas compartment (100) extending from a lower surface of the gas cup (96) to a closed lower end of the second tube (80).

13. The damper assembly (20) of any one of Claims 1 to 12, wherein the first chamber (52) and the upper oil chamber (86) have equal cross-sectional areas.
